# EUROPÄISCHE PATENTSCHRIFT

(11) **EP 3 256 334 B1**
(45) Veröffentlichungstag und Bekanntmachung des Hinweises auf die Patenterteilung: **20.02.2019**
(21) Anmeldenummer: 15804493.3
(22) Anmeldetag: 03.12.2015
(51) Int. Cl.: B60C 11/03, B60C 11/13

(54) **FAHRZEUGLUFTREIFEN**
PNEUMATIC TYRE FOR A VEHICLE
PNEUMATIQUE DE VÉHICULE

(30) Priorität: 13.02.2015 DE 102015202614
(43) Veröffentlichungstag der Anmeldung: 20.12.2017
(73) Patentinhaber: Continental Reifen Deutschland GmbH, 30165 Hannover (DE)
(72) Erfinder: BEHR, Ulrich, 30167 Hannover (DE)
(74) Vertreter: Finger, Karsten
(86) Internationale Anmeldenummer: PCT/EP2015/078488
(87) Internationale Veröffentlichungsnummer: WO 2016/128086

(56) Entgegenhaltungen:
- EP-A2- 2 781 374
- DE-A1-102011 056 636
- DE-A1-102012 109 712
- US-A- 4 977 942

## Beschreibung

Die Erfindung betrifft einen Fahrzeugluftreifen mit einem Laufstreifen, welcher zumindest eine blockartig strukturierte, in Umfangsrichtung umlaufende schulterseitige Profilrippe aufweist, in welcher in axialer Richtung einschnittartig ausgebildete Querrillen verlaufen, welche sich jeweils aus drei Rillenabschnitten zusammensetzen, einem mittleren Rillenabschnitt, einem laufstreifeninnenseitig verlaufenden Rillenabschnitt, welcher innerhalb des Umfangsbereiches endet, und einem laufstreifenaußenseitig verlaufenden Rillenabschnitt, welcher außerhalb der Bodenaufstandsfläche endet.

Ein derartiger Fahrzeugluftreifen ist aus der DE 10 2012 109 712 A1 bekannt. Der bei am Fahrzeug montiertem Reifen der Außenschulter zugeordnete Umfangsbereich ist eine Umfangsrippe, die durch eine in Umfangsrichtung umlaufende Umfangsnut von weiteren Profilelementen getrennt ist. In diesem Umfangsbereich ist eine Vielzahl von zueinander zumindest im Wesentlichen parallel verlaufenden Querrillen ausgebildet, welche sich jeweils aus drei zueinander gewinkelt verlaufenden Rillenabschnitten zusammensetzen, wobei die beiden äußeren Rillenabschnitte zumindest im Wesentlichen in axialer Richtung verlaufen und der diese verbindende Rillenabschnitt unter einem stumpfen Winkel zu den beiden äußeren Rillenabschnitten verläuft. Der mittlere Rillenabschnitt ist von zwei gegenläufig verlaufenden Schrägflächen begrenzt, in den beiden äußeren Rillenabschnitten ist jeweils eine der Rillenflanken zur Laufstreifenoberfläche mit einer Fase versehen. Durch die drei Rillenabschnitte soll ein größeres Negativvolumen in diesem Laufstreifenbereich vorliegen und dadurch ein gutes Wasserableitvermögen in diesem Bereich gewährleistet sein. Trotz größerem Negativvolumen lässt sich mit derart ausgeführten, mehrere zueinander gewinkelt angeordnete Rillenabschnitte aufweisenden Querrillen das Wasserableitvermögen nicht im erwünschten Ausmaß verbessern. Das größere Negativvolumen beeinträchtigt ferner die Stabilität der schulterseitigen Umfangsrippe, was sich auf die Bremseigenschaften auf nasser und trockener Fahrbahn ungünstig auswirkt.

Aus der DE 10 2011 056 636 A1 ist ein Fahrzeugluftreifen mit einem Laufstreifen mit einer schulterseitigen Profilrippe bekannt, in welcher Querrillen vorgesehen sind, die laufstreifeninnenseitig innerhalb der Profilrippe eine zur Laufstreifenperipherie verlaufende, in Draufsicht im Wesentlichen halbkreisförmige Eckfläche aufweisen, welche in einen kugelabschnittsförmig geformten Endabschnitt des Rillenbodens übergeht. Dadurch soll das Entstehen von Kerbspannungen reduziert werden, um bei den im Betrieb des Reifens auftretenden Längs- und Querkräften das Entstehen von Rissen im Gummimaterial zu verhindern.

Die US 4 977 942 A offenbart einen Nutzfahrzeugreifen mit einem Laufstreifen, welcher in seinen schulterseitigen Profilrippen Querrillen aufweist, die laufstreifeninnenseitig innerhalb der Profilrippe auslaufen und laufstreifenaußenseitig an der Richtung Seitenwand verlaufenden Schulterflanke austreten. Die Rillen sind im Querschnitt trichterartig ausgeführt und sollen einen gleichmäßigen Laufstreifenabrieb ermöglichen.

Aus der EP 278 137 4 A2 ist ein Fahrzeugluftreifen mit einem Laufstreifen mit schulterseitigen Profilrippen bekannt, in welchen in Draufsicht parallel zueinander sowie leicht bogenförmig verlaufende Einschnitte ausgebildet sind. An jedem zweiten Einschnitt ist eine oberflächliche den Einschnitt entlang verlaufende Rille ausgebildet. Ein solcher Reifen soll besonders gut auf Lenkkräfte ansprechen.

Der Erfindung liegt daher die Aufgabe zugrunde, Querrillen in schulterseitigen Umfangsbereichen eines Laufstreifens eines Fahrzeugluftreifens derart zu gestalten, dass der Zielkonflikt zwischen einer Verbesserung der Bremseigenschaften auf trockener und nasser Fahrbahn einerseits und der Wasserableitung zur Außenseite des Reifens andererseits besser als bisher gelöst wird.

Gelöst wird die gestellte Aufgabe erfindungsgemäß dadurch, dass sich die Querrillen insgesamt im Wesentlichen geradlinig erstrecken, wobei der mittlere Rillenabschnitt über zumindest 60 % der axialen Erstreckung der Querrillen verläuft, eine Richtung laufstreifenaußenseitigen Rillenabschnitt abnehmende Tiefe sowie im Querschnitt zwei im Wesentlichen in radialer Richtung verlaufende, einen gegenseitigen Abstand von 0,4 mm bis 1,2 mm aufweisende Rillenflanken aufweist, wobei an eine der Rillenflanken nahe der Rippenaußenfläche eine unter einem Winkel von 30° bis 50° zur radialen Richtung verlaufende Fase anschließt, wobei der mittlere Rillenabschnitt unter Fortsetzung seiner an der Rippenaußenfläche vorliegenden Randkanten in den laufstreifenaußenseitig verlaufenden Rillenabschnitt übergeht, welcher einen Endabschnitt aufweist, der einen U-förmigen Querschnitt und eine Tiefe von 1,0 mm bis 1,5 mm aufweist.

Der geradlinige Verlauf der Querrillen ist für ein gutes Wasserableitvermögen besonders vorteilhaft, wobei die Fasen im mittleren Rillenabschnitt einerseits den Laufstreifen stabilisieren und andererseits die Querrillen verbreitern, was ebenfalls für die Wasserableitung in Richtung Laufstreifenaußenseite von Vorteil ist. Im laufstreifenaußenseitigen Endabschnitt wird eine Art flaches Reservoir für Wasser zur Verfügung gestellt, welches zusätzlich die Wasserableitung nach außen begünstigt. Wie erwähnt stabilisieren die erfindungsgemäß gestalteten Querrillen den Laufstreifenbereich, in welchem sie ausgebildet sind, wodurch gute Bremseigenschaften auf trockenen und auch auf nassen Fahrbahnen sichergestellt sind.

Bei einer bevorzugten Ausführungsform der Erfindung reicht die Fase in radialer Richtung bis in eine Tiefe von 0,5 mm bis 1,5 mm. Die stabilisierende Wirkung von Fasen ist vor allem bei neuem Reifen von Bedeutung, sodass es ausreicht, die Fasen lediglich oberflächlich auszubilden.

Für eine verwirbelungsarme Entwässerung ist es von Vorteil, wenn die Fase im laufstreifenaußenseitigen, vorzugsweise auch im laufstreifeninnenseitigen Rillenabschnitt unter kontinuierlicher Verringerung ihrer radialen Erstreckung zur Laufstreifenoberfläche ausläuft.

Bevorzugt ist ferner eine Ausgestaltung der Querrille, bei der ihre größte Tiefe im mittleren Rillenabschnitt 4 mm bis 7 mm beträgt. Dabei weist der mittlere Rillenabschnitt seine größte Tiefe am Übergangsbereich zum laufstreifeninnenseitigen Rillenabschnitt auf.

Bei einer weiteren bevorzugten Ausführungsform der Erfindung ist das geschlossene Ende des laufstreifenaußenseitigen Rillenabschnittes in Draufsicht gerundet, insbesondere entlang eines Halbkreises gerundet, ausgeführt. Diese Maßnahme reduziert Kerbspannungen in diesem Bereich und verhindert dadurch das Entstehen von Einrissen.

Vorzugsweise weist ferner der Endabschnitt des laufstreifenaußenseitigen Rillenabschnittes eine axiale Erstreckung von 10 % bis 15 % der axialen Erstreckung der Querrille auf. Diese Maßnahme begünstigt ein effektives Abströmen des sich in den Endabschnitten sammelnden Wassers.

Bevorzugterweise sind die Querrillen in zumindest jener Profilrippe ausgebildet, die bei am Fahrzeug montiertem Reifen an der Außenschulter liegt.

Weitere Merkmale, Vorteile und Einzelheiten der Erfindung werden nun anhand der schematischen Zeichnung, die ein Ausführungsbeispiel darstellt, näher beschrieben. Dabei zeigen
- Fig. 1: eine Ansicht eines Umfangsbereiches eines Laufstreifens eines Fahrzeugluftreifens,
- Fig. 2: eine Schnittdarstellung entlang der Linie II-II der Fig. 1,
- Fig. 3: eine Schnittdarstellung entlang der Linie III-III der Fig. 1 und
- Fig. 4: eine Schnittdarstellung entlang der Linie IV-IV der Fig. 1.

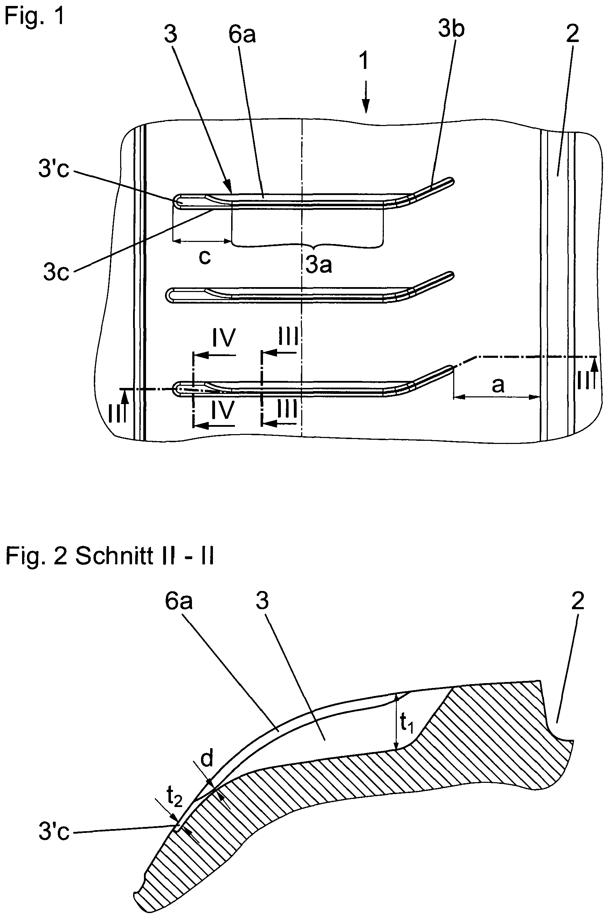

Fig. 1 zeigt einen Umfangsabschnitt einer bei einer Reifenschulter verlaufenden, strukturierten Profilrippe 1 eines Laufstreifens eines Fahrzeugluftreifens in Radialbauart für Personenkraftwagen, Vans und dergleichen. Die Profilrippe 1 ist durch eine in Umfangsrichtung umlaufende Umfangsrille 2 von den zur Laufstreifenmitte anschließenden Profilelementen des Laufstreifens, beispielsweise einer in Umfangsrichtung umlaufende Blockreihe oder einer weiteren Profilrippe, getrennt. Die blockartige Struktur der Profilrippe 1 entsteht durch in der Profilrippe 1 verlaufende einschnittartig ausgebildete Querrillen 3. Bei der in Fig. 1 gezeigten Ausführungsform verlaufen die Querrillen 3 geradlinig bzw. im Wesentlichen geradlinig unter relativ geringen gegenseitigen Abständen von 10 mm bis 17 mm nahezu exakt in Laufstreifenquerrichtung, wobei die Querrillen 3 auch unter einem spitzen Winkel von bis zu 30° zur exakten Laufstreifenquerrichtung verlaufen können. Die Querrillen 3 setzen sich aus einem über zumindest 60 % ihrer Erstreckung verlaufenden mittleren Rillenabschnitt 3a, einem laufstreifeninnenseitigen Rillenabschnitt 3b und einem laufstreifenaußenseitigen Rillenabschnitt 3c zusammen. Der laufstreifeninnenseitige Rillenabschnitt 3b endet in einem Abstand a von insbesondere 10 mm bis 20 mm vor der Umfangsrille 2, der laufstreifenaußenseitige Rillenabschnitt 3c befindet sich außerhalb der bodenberührenden Teils des Laufstreifens, dessen in der Profilrippe 1 befindlicher seitlicher Rand mit einer gestrichelten Linie gekennzeichnet ist. Der bodenberührende Teil des Laufstreifens entspricht dem statisch ermittelten Footprint gemäß E.T.R.T.O.-Standards (Last bei 70 % der Tragfähigkeit bei einem Innendruck von 2,5 bar, Innendruck 85 % von 2,5 bar).

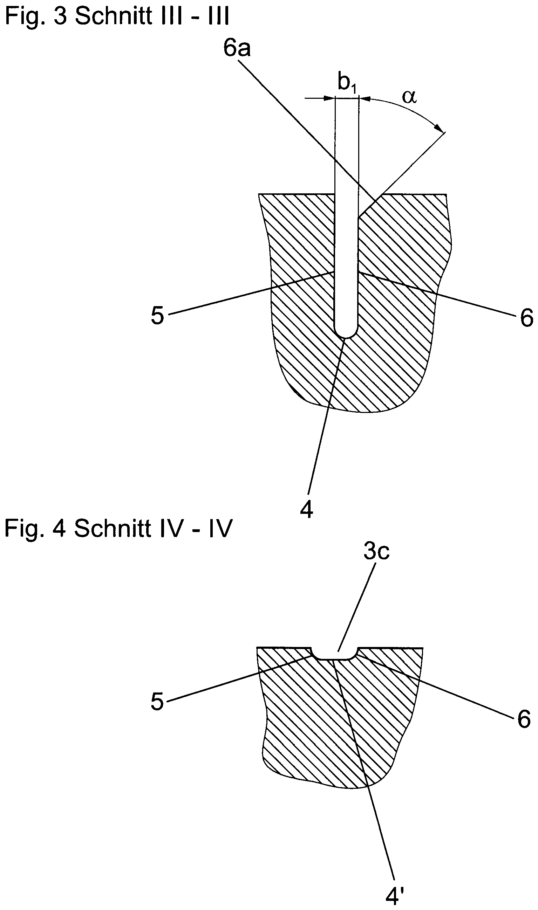

Im Rillenabschnitt 3a weist jede Querrille 3 den in Fig. 3 gezeigten Querschnitt mit zwei in radialer Richtung verlaufenden Rillenflanken 5, 6, einem gerundeten Rillengrund 4 und einer Fase 6a - einer schmalen Schrägfläche zwischen der Rillenflanke 6 und der Außenfläche der Profilrippe 1 - auf. Zwischen den Rillenflanken 5, 6 weist die Querrille 3 eine Breite b₁ von 0,4 mm bis 1,2 mm und an ihrer tiefsten Stelle beim Übergang zum laufstreifenaußenseitigen Rillenabschnitt 3b eine Tiefe t₁ von 4 mm bis 7 mm auf. Die Fase 6a verläuft zur radialen Richtung unter einem Winkel α, welcher zwischen 30° und 50° beträgt, und reicht bis in eine Tiefe t₁ von 0,5 mm bis 1,5 mm. Über die Erstreckung des mittleren Rillenabschnittes 3a bildet die Fase 6a daher eine die Breite der Querrille 3 vergrößernde Schrägfläche. Über die Erstreckung des Rillenabschnittes 3a ist diese Breite konstant, auch die Neigung und der Verlauf der Fase 6a sind über die Erstreckung des Rillenabschnittes 3a konstant bzw. im Wesentlichen konstant, das heißt es ändern sich t₁ und der Winkel α kaum bzw. nicht. Im laufstreifeninnenseitigen Rillenabschnitt 3b sind die Rillenflanke 5 und die dieser gegenüberliegende Rillenflanke 6 sowie die Fase 6a derart fortgesetzt, dass sich die Tiefe T der Querrille 3 kontinuierlich verringert, sodass am geschlossenen Ende des Rillenabschnittes 3b keine nennenswerte bzw. eine sehr geringe Tiefe vorliegt. Dabei läuft die Fase 6a unter Beibehalten ihrer geradlinig verlaufenden Kante an der Laufstreifenoberfläche und unter kontinuierlicher Verringerung ihrer Breite in radialer Richtung im Bereich des Endes des laufstreifeninnenseitigen Rillenabschnittes 3b aus. Die Rillenflanken 5 und 6 folgen der auslaufenden Fase 6a, sodass der Rillenabschnitt 3b leicht bogenförmig verläuft.

In Richtung laufstreifenaußenseitigem Rillenabschnitt 3c verringert sich die radiale Erstreckung der Rillenflanken 5 und 6 bis auf eine Tiefe t₂ von 1,0 mm bis 1,5 mm. Die Fase 6a läuft unter kontinuierlicher Verringerung ihrer Breite und ihrer radialen Erstreckung an der Laufstreifenoberfläche aus, wobei sich die an der Laufstreifenoberfläche befindlichen Querrillenkanten des mittleren Rillenabschnittes 3a im laufstreifenaußenseitigen Rillenabschnitt 3c unter Beibehalten ihres gegenseitigen Abstandes fortsetzen. Am Übergang vom mittleren Rillenabschnitt 3a in den laufstreifenaußenseitigen Rillenabschnitt 3c verbleibt zwischen der radial inneren Kante der Fase 6a und dem Rillengrund 4 ein Abstand d von 0,1 mm bis 1 mm. Der Endabschnitt 3'c des laufstreifenaußenseitigen Rillenabschnittes 3c weist den in Fig. 3 gezeigten flach U-förmigen Querschnitt mit zwei bis in die erwähnte Tiefe t₂ von 1,0 mm bis 1,5 mm verlaufenden Rillenflanken 5 und 6, die im Wesentlichen in radialer Richtung verlaufen, und mit einem breiten Rillengrund 4' auf, dessen Breite im Wesentlichen der Breite des Rillenabschnittes 3c an der Laufstreifenoberfläche entspricht.

Das geschlossene Ende des Endabschnittes 3'c ist in Draufsicht gerundet, insbesondere entlang eines Halbkreises gerundet, ausgeführt. Der Endabschnitt 3'c weist ferner eine axiale Erstreckung c von 5 % bis 15 % der axialen Erstreckung der Querrille 3 auf.

Erfindungsgemäß ausgeführte Querrillen 3 werden bevorzugt in einer Profilrippe 1 bei der Außenschulter des Laufstreifens eines Fahrzeugluftreifens ausgebildet. Die Außenschulter ist jene Schulter, die bei montiertem Reifen an der Fahrzeugaußenseite liegt. Demnach können erfindungsgemäß ausgeführte Laufstreifen auch als Laufstreifen mit einer asymmetrischen Profilierung ausgeführt werden, sodass sich die Profilstrukturen in den beiden Laufstreifenhälften voneinander unterscheiden, um dem Fahrzeugluftreifen bestimmte vorteilhafte Eigenschaften zu verleihen.

Nachdem der mittlere Rillenabschnitt 3a der Querrille 3 in den Bereich außerhalb des bodenberührenden Teils des Laufstreifens hinein verläuft, verläuft auch die Fase 6a über einen Abschnitt außerhalb der Bodenaufstandsflächenbreite. Diese Ausgestaltung begünstigt das Ableiten von Wasser aus den Querrillen 3 nach außen, wobei der laufstreifenaußenseitige Rillenabschnitt 3c eine Art Wasserreservoir zur Verfügung stellt, wodurch eine weitere Verbesserung des Wasserableitvermögens durch die Querrillen 3 erreicht wird. Die Fase 6a stabilisiert den Laufstreifen und gewährleistet dadurch gute Bremseigenschaften auf trockenen und nassen Fahrbahnen.

### Bezugsziffernliste

- 1: Profilrippe
- 2: Umfangsrille
- 3: Querrille
- 3a, 3b, 3c: Rillenabschnitt
- 3'c: Endabschnitt
- 4, 4': Rillengrund
- 5, 6: Rillenflanke
- 6a: Fase
- a, d: Abstand
- b₁: Breite
- c: Erstreckung
- T, t₁, t₂: Tiefe
- a, β: Winkel

## Patentansprüche

1. Fahrzeugluftreifen mit einem Laufstreifen, welcher zumindest eine blockartig strukturierte, in Umfangsrichtung umlaufende schulterseitigen Profilrippe (1) aufweist, in welcher in axialer Richtung einschnittartig ausgebildete Querrillen (3) verlaufen, welche sich jeweils aus drei Rillenabschnitten (3a, 3b, 3c) zusammensetzen, einem mittleren Rillenabschnitt (3a), einem laufstreifeninnenseitig verlaufenden Rillenabschnitt (3b), welcher innerhalb der Profilrippe (1) endet, und einem laufstreifenaußenseitig verlaufenden Rillenabschnitt (3c), welcher außerhalb der Bodenaufstandsfläche endet,
**dadurch gekennzeichnet,**
**dass** sich die Querrillen (3) insgesamt im Wesentlichen geradlinig erstrecken, wobei der mittlere Rillenabschnitt (3a) über zumindest 60 % der axialen Erstreckung der Querrillen (3) verläuft, eine Richtung laufstreifenaußenseitigen Rillenabschnitt (3c) abnehmende Tiefe (T) sowie im Querschnitt zwei im Wesentlichen in radialer Richtung verlaufende, einen gegenseitigen Abstand von 0,4 mm bis 1,2 mm aufweisende Rillenflanken (5, 6) aufweist, wobei an eine der Rillenflanken (6) nahe der Rippenaußenfläche eine unter einem Winkel (α) von 30° bis 50° zur radialen Richtung verlaufende Fase (6a) anschließt, wobei der mittlere Rillenabschnitt (3a) unter Fortsetzung seiner an der Rippenaußenfläche vorliegenden Randkanten in den laufstreifenaußenseitig verlaufenden Rillenabschnitt (3c) übergeht, welcher einen Endabschnitt (3'c) aufweist, der einen U-förmigen Querschnitt und eine Tiefe (t₂) von 1,0 mm bis 1,5 mm aufweist.

2. Fahrzeugluftreifen nach Anspruch 1, **dadurch gekennzeichnet, dass** die Fase (6a) in radialer Richtung bis in eine Tiefe (t₁) von 0,5 mm bis 1,5 mm reicht.

3. Fahrzeugluftreifen nach Anspruch 1 oder 2, **dadurch gekennzeichnet, dass** die Fase (6a) im laufstreifenaußenseitigen, vorzugsweise auch im laufstreifeninnenseitigen Rillenabschnitt (3b, 3c) unter kontinuierlicher Verringerung ihrer radialen Erstreckung zur Laufstreifenoberfläche ausläuft.

4. Fahrzeugluftreifen nach einem der Ansprüche 1 bis 3, **dadurch gekennzeichnet, dass** die größte Tiefe des mittleren Rillenabschnittes (3a) 4 mm bis 7 mm beträgt.

5. Fahrzeugluftreifen nach einem der Ansprüche 1 bis 4, **dadurch gekennzeichnet, dass** das geschlossene Ende (3'c) des laufstreifenaußenseitigen Rillenabschnittes (3c) in Draufsicht gerundet, insbesondere entlang eines Halbkreises gerundet, ausgeführt ist.

6. Fahrzeugluftreifen nach einem der Ansprüche 1 bis 5, **dadurch gekennzeichnet, dass** der Endabschnitt (3'c) des laufstreifenaußenseitigen Rillenabschnittes (3c) eine axiale Erstreckung (c) von 5 % bis 15 % der axialen Erstreckung der Querrille (3) aufweist.

7. Fahrzeugluftreifen nach einem der Ansprüche 1 bis 6, **dadurch gekennzeichnet, dass** die Profilrippe (1) bei am Fahrzeug montiertem Reifen an der Außenschulter liegt.

## Claims

1. Pneumatic vehicle tyre, comprising a tread, which has at least one shoulder-side profile rib (1), which is structured in the manner of blocks and runs around in the circumferential direction and in which transverse grooves (3) formed in the manner of sipes run in the axial direction, each composed of three groove segments (3a, 3b, 3c), a middle groove segment (3a), a groove segment (3b) that runs on the inner side of the tread and ends within the profile rib (1), and a groove segment (3c) that runs on the outer side of the tread and ends outside the ground contact area,
**characterized**
**in that** the transverse grooves (3) extend substantially linearly overall, wherein the middle groove segment (3a) runs over at least 60% of the axial extent of the transverse grooves (3) and has a depth (T) that decreases in the direction of the groove segment (3c) that runs on the outer side of the tread and has in cross section two groove flanks (5, 6) that run substantially in the radial direction and have a mutual spacing of 0.4 mm to 1.2 mm, wherein one of the groove flanks (6) is adjoined near the rib outer surface by a bevel (6a) running at an angle (α) of 30° to 50° to the radial direction, wherein the middle groove segment (3a), continuing the bordering edges thereof present on the rib outer surface, goes over into the groove segment (3c) that runs on the outer side of the tread, which groove segment has an end segment (3'c), which has a U-shaped cross section and a depth (t₂) of 1.0 mm to 1.5 mm.

2. Pneumatic vehicle tyre according to Claim 1, **characterized in that** the bevel (6a) reaches in the radial direction to a depth (t₁) of 0.5 mm to 1.5 mm.

3. Pneumatic vehicle tyre according to Claim 1 or 2, **characterized in that** in the groove portion (3b, 3c) on the outer side of the tread, preferably also on the inner side of the tread, the bevel (6a) runs out with a continuous reduction in its radial extent in relation to the surface of the tread.

4. Pneumatic vehicle tyre according to one of Claims 1 to 3, **characterized in that** the greatest depth of the middle groove portion (3a) is 4 mm to 7 mm.

5. Pneumatic vehicle tyre according to one of Claims 1 to 4, **characterized in that** the closed end (3'c) of the groove portion (3c) on the outer side of the tread is of a rounded design in plan view, in particular rounded along a semicircle.

6. Pneumatic vehicle tyre according to one of Claims 1 to 5, **characterized in that** the end segment (3'c) of the groove segment (3c) on the outer side of the tread has an axial extent (c) of 5% to 15% of the axial extent of the transverse groove (3).

7. Pneumatic vehicle tyre according to one of Claims 1 to 6, **characterized in that**, when the tyre is fitted on the vehicle, the profile rib (1) lies on the outer shoulder.

## Revendications

1. Pneumatique de véhicule comprenant une bande de roulement qui comporte au moins une nervure profilée (1) côté épaulement s'étendant circonférentiellement et structurée en forme de bloc, dans laquelle des rainures transversales (3) s'étendent dans la direction axiale, lesquelles se composent chacune de trois portions de rainure (3a, 3b, 3c), à savoir une portion de rainure médiane (3a), une portion de rainure (3b) qui s'étend du côté intérieur de la bande de roulement et qui se termine à l'intérieur de la nervure profilée (1) et une portion de rainure (3c) qui s'étend du côté extérieur de la bande de roulement et qui se termine à l'extérieur de la surface de contact avec le sol,
**caractérisé en ce que**
les rainures transversales (3) s'étendent toutes sensiblement en ligne droite, la portion de rainure médiane (3a) s'étendant sur au moins 60 % de l'étendue axiale des rainures transversales (3), ayant une profondeur (T) qui diminue en direction de la portion de rainure (3c) du côté extérieur de la bande de roulement et comportant en coupe transversale deux flancs de rainure (5, 6) s'étendant sensiblement dans une direction radiale et qui sont espacés l'un de l'autre d'une distance de 0,4 mm à 1,2 mm, un biseau (6a) qui s'étend en formant un angle (α) de 30 ° à 50 ° par rapport à la direction radiale se raccordant à l'un des flancs de rainure (6) près de la surface extérieure de la nervure, la portion de rainure médiane (3a) se transformant, en prolongeant son arête de bord présente au niveau de la surface extérieure de la nervure, en la portion de rainure (3c) qui s'étend du côté extérieur de la bande de roulement et qui comporte une portion d'extrémité (3'c) ayant une section transversale en forme de U et une profondeur (t₂) de 1,0 mm à 1,5 mm.

2. Pneumatique de véhicule selon la revendication 1, **caractérisé en ce que** le biseau (6a) s'étend dans la direction radiale jusqu'à une profondeur (t₁) de 0,5 mm à 1,5 mm.

3. Pneumatique de véhicule selon la revendication 1 ou 2, **caractérisé en ce que** le biseau (6a) se termine dans la portion de nervure (3b, 3c) côté extérieur de la bande de roulement, de préférence également côté intérieur de la bande de roulement, avec réduction continue de son étendue radiale par rapport à la surface de la bande de roulement.

4. Pneumatique de véhicule selon l'une des revendications 1 à 3, **caractérisé en ce que** la plus grande profondeur de la portion de rainure médiane (3a) est comprise entre 4 mm et 7 mm.

5. Pneumatique de véhicule selon l'une des revendications 1 à 4, **caractérisé en ce que** l'extrémité fermée (3'c) de la portion de rainure (3c) côté extérieur de la bande de roulement est arrondie en vue de dessus, notamment arrondie suivant un demi-cercle.

6. Pneumatique de véhicule selon l'une des revendications 1 à 5, **caractérisé en ce que** la partie d'extrémité (3'c) de la portion de rainure (3c) côté extérieur de la bande de roulement a une étendue axiale (c) de 5 % à 15 % de l'étendue axiale de la rainure transversale (3).

7. Pneumatique de véhicule selon l'une des revendications 1 à 6, **caractérisé en ce que** la nervure profilée (1) est située au niveau de l'épaulement extérieur lorsqu'un pneumatique est monté sur le véhicule.
